# EUROPEAN PATENT SPECIFICATION

(11) **EP 3 189 179 B1**
(45) Date of publication and mention of the grant of the patent: **16.02.2022**
(21) Application number: 15838471.9
(22) Date of filing: 11.08.2015
(51) Int. Cl.: D06F 37/26, D06F 39/12, D06F 23/02, D06F 39/14

(54) **WASHING MACHINE**
WASCHMASCHINE
LAVE-LINGE

(30) Priority: 05.09.2014 KR 20140118853
(43) Date of publication of application: 12.07.2017
(73) Proprietor: Samsung Electronics Co., Ltd., Gyeonggi-do 16677 (KR)
(72) Inventor: WEE, Hoon, Yongin-si Gyeonggi-do 16930 (KR); JANG, In Cheol, Hwaseong-si Gyeonggi-do 18436 (KR); JEOUNG, Jeoung Kyo, Hwaseong-si Gyeonggi-do 18379 (KR)
(74) Representative: Walaski, Jan Filip
(86) International application number: PCT/KR2015/008383
(87) International publication number: WO 2016/036021

(56) References cited:
- WO-A1-02/00988
- DE-B3-102006 054 103
- KR-A- 20070 025 303
- KR-A- 20070 025 303
- KR-A- 20080 086 773
- KR-B1- 100 484 844
- KR-B1- 100 692 556
- KR-B1- 100 733 298
- None

## Description

The present disclosure relates to a washing machine, and more particularly, to a washing machine from which a diaphragm is removed.
KR20070025303 discloses a drum type washing machine comprising a body formed with an inlet hole; a tub formed with an opening part; and a packing member arranged to keep airtightness between the opening part of the tub and the inlet hole.
DE102006054103 discloses a front-loading washing machine that has an aperture in the case with a circular hinged hatch and angled cuff seal.

A washing machine is an apparatus removing contaminants from laundry by using a detergent and water. Washing machines are classified into three types according to their washing method, agitator-type washing machines, vortex-type washing machines, and drum-type washing machines. In the agitator-type washing machines, clothes are washed by rotating an agitator protruding from the center of the bottom of a wash tub clockwise and counterclockwise. In the vortex-type washing machines, clothes are washed by using friction between the clothes and a water stream generated by rotating a disc-shaped pulsator mounted on the bottom of a rotary tub clockwise and counterclockwise. In the drum-type washing machines, clothes are washed by adding water, a detergent, and the clothes into a drum having a plurality of lifters protruding from the inner circumferential surface thereof and rotating the drum.

Washing machines are also classified into top-loading washing machines and front-loading washing machines according to their shape. The top-loading washing machine is a washing machine into which laundry is put through an inlet provided at the top surface of the washing machine. The front-loading washing machine is a washing machine into which laundry is put through an inlet provided at the front surface of the washing machine. In general, the agitator-type and vortex-type washing machines are top-loading washing machines, and the drum-type washing machines are front-loading washing machines.

A drum-type washing machine may include a cabinet forming an external appearance of the washing machine, a tub disposed in the cabinet to contain wash water, and a rotary tub rotatably disposed in the tub. An inlet for insertion and removal of laundry is formed at a front side of the cabinet, and the inlet is opened and closed by a door coupled to the front side of the cabinet.

In general, a diaphragm that absorbs vibration of the tub and seals a gap between the tub and the cabinet is disposed between the tub and the cabinet. However, the diaphragm may get moldy since remaining wash water and foreign matter are introduced thereinto.

In addition, when the diaphragm is removed, a gap is formed between the tub and the cabinet, and thus laundry may fall into the gap between the tub and the cabinet during insertion and removal of the laundry. Also, the removal of the diaphragm may cause leakage of water and result in marring of the external appearance of the washing machine. When the tub and the cabinet are disposed to be in contact with each other to remove the gap therebetween, the vibration of the tub may be transferred to the cabinet.

An aspect of the present disclosure is to provide a washing machine from which a diaphragm is removed and in which sealing members are provided at a door and a main body.

Another aspect of the present disclosure is to provide a washing machine having an attractive appearance appealing to a user by applying a decorative panel to a front surface of a front panel.

According to an aspect of the invention, there is provided a washing machine as set out in claim 1.

The washing machine according to the present disclosure may have an attractive appearance appealing to a user by mounting a decorative panel on the front surface thereof to prevent exposure of a sealing structure.

In addition, remaining of wash water and fur and growth of mold caused thereby may be prevented by removing a diaphragm.

### BRIEF DESCRIPTION OF THE DRAWINGS

FIG. 1 is a perspective view illustrating a washing machine according to an embodiment of the present disclosure;
FIG. 2 is a perspective view illustrating a washing machine according to an embodiment of the present disclosure in which a door is rotated;
FIG. 3 is a side cross-sectional view illustrating a washing machine according to an embodiment of the present disclosure;
FIG. 4 is an enlarged view illustrating a part of FIG. 3
FIG. 5 is an exploded view illustrating a washing machine in which a door is separated from a main body according to an embodiment of the present disclosure;
FIG. 6 is an exploded view illustrating a door of a washing machine according to an embodiment of the present disclosure;
FIG. 7 is an exploded view illustrating a main body of a washing machine according to an embodiment of the present disclosure; and
FIG. 8 is an exploded view illustrating a main body of a washing machine according to an embodiment of the present disclosure.

### Best Mode

Hereinafter, embodiments of the present disclosure will be described in detail with reference to the accompanying drawings.

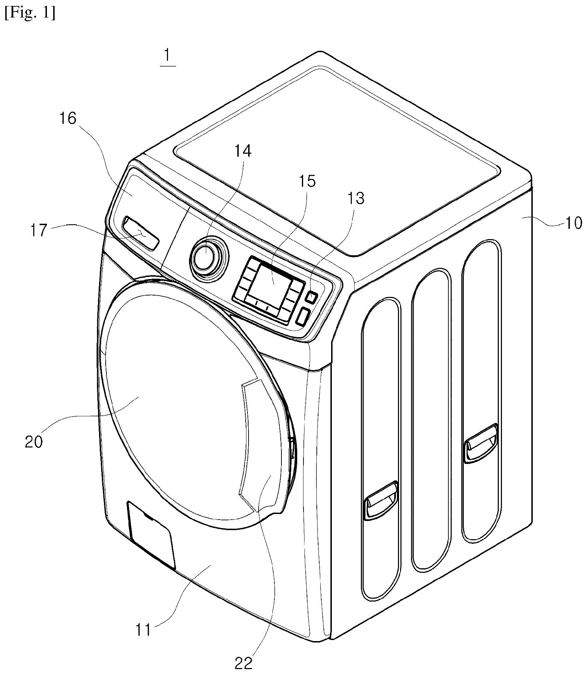

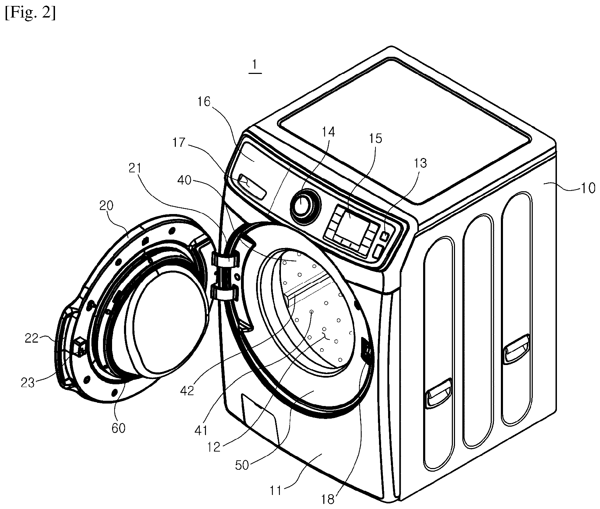

FIG. 1 is a perspective view illustrating a washing machine according to an embodiment of the present disclosure. FIG. 2 is a perspective view illustrating a washing machine according to an embodiment of the present disclosure in which a door is rotated.

Referring to FIG. 1, a washing machine 1 includes a cabinet 10 that forms an external appearance of the washing machine 1.

In addition, the washing machine 1 includes a front panel 11 disposed at one side of the cabinet 10. The front panel 11 is disposed at the front surface of the cabinet 10 forming an appearance of the front surface of the washing machine 1. The front panel 11 includes an inlet 12 for insertion and removal of laundry.

In addition, the front panel 11 may include a power button 13, a manipulation unit 14, and a display unit 15. A user may turn on and off the washing machine 1 by using the power button 13. The manipulation unit 14 may have various forms such that the user selects a variety of modes of the washing machine 1. The display unit 15 may display an operation selected via the power button 13 and the manipulation unit 14 such that the user recognizes the selected operation.

The front panel 11 may further include a detergent compartment 16 through which a detergent is introduced by the user. The detergent compartment 16 may have a detergent compartment grip portion 17 at the front side thereof such that the user easily moves the detergent compartment 16.

In addition, the washing machine 1 includes a door 20 to open and close the inlet 12. The door 20 may be coupled to the cabinet 10 to open and close the inlet 12. Particularly, the door 20 may be disposed at one side of the front panel 11 having the inlet 12. The door 20 may be formed of a transparent material such that the user identifies the inside of the washing machine 1.

The door 20 may be rotatably coupled to the front panel 11 for easy insertion and removal of the laundry through the inlet 12 by the user. As illustrated in FIG. 2, the door 20 may be rotatable at a predetermined angle with respect to the front panel 11. FIG. 1 illustrates the door 20 that closes the inlet 12, and FIG. 2 illustrates the door 20 that opens the inlet 12.

The door 20 may be rotatably coupled with the front panel 11 via a hinge member 21. The hinge member 21 may be installed to couple the front panel 11 with the door 20. That is, the hinge member 21 may be configured to rotatably couple the door 20 with the front panel 11. The hinge member 21 may be fixed to the front panel 11 and rotatably coupled to one side of the door 20.

The hinge member 21 may include at least one material selected from the group consisting of metal such as stainless steel, aluminum, and engineering plastics. The front panel 11 may include a fixing bracket (not shown) such that the hinge member 21 is stably fixed to the front panel 11. However, FIG. 2 illustrates an example of the shape of the hinge member 21, and the hinge member 21 may have various other shapes.

The door 20 may have a hand grip portion 22 which may be gripped by the user to rotate the door 20. The hand grip portion 22 may be disposed at the opposite side of the door to the hinge member 21. Thus, the user may easily open and close the inlet 12 by rotating the door 20 while gripping the hand grip portion 22.

The door 20 may include door lock devices 18 and 23 to prevent the inlet 12 from being opened while performing a washing operation. The door lock devices 18 and 23 may be provided to fix the door 20 and the front panel 11. The door lock devices 18 and 23 may be disposed at the opposite side of the door 20 to the hinge member 21.

That is, the door lock devices 18 and 23 may be disposed adjacent to the hand grip portion 22. In this case, the hand grip portion 22 may be disposed at the front surface of the inlet 12 to open and close the inlet 12, and the door lock devices 18 and 23 may be disposed at the rear surface of the door 20 to be fixed to the front panel 11.

The door lock devices 18 and 23 may include a hook 23 installed at the door 20 and a hook recess 18 disposed at the front panel 11. The hook 23 may be installed in an elastically movable manner and detachably coupled to the hook recess 18. When a washing operation is started, the door 20 may be fixed to the front panel 11 by fixing the hook 23 to the hook recess 18.

In addition, a sealing structure to prevent leakage of water may be provided between the door 20 and the front panel 11. This will be described in more detail later.

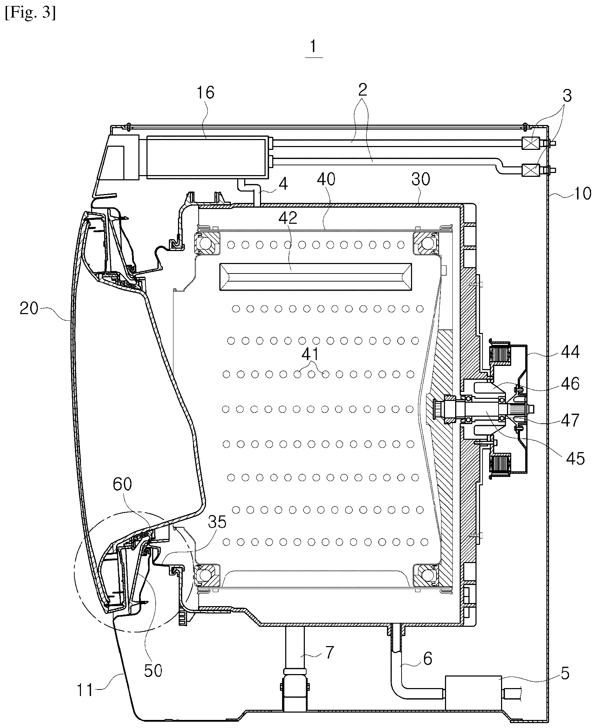

FIG. 3 is a side cross-sectional view illustrating a washing machine according to an embodiment of the present disclosure. FIG. 3 schematically illustrates constituent elements of the washing machine for descriptive purpose. Referring to FIG. 3, the constituent elements of the washing machine will be briefly described.

The washing machine 1 includes a tub 30 disposed in the cabinet 10. The tub 30 is installed to contain wash water.

In addition, a rotary tub 40 may be rotatably disposed in the tub 30. Laundry is introduced into the rotary tub 40 and washed. The rotary tub 40 may have a plurality of through holes 41 through which wash water flows. In addition, a plurality of lifters 42, by which laundry is raised and dropped when the rotary tub 40 is rotated, may be installed at the inner circumference thereof.

A water supply pipe 2 to supply wash water to the tub 30 is installed at an upper portion of the tub 30. One end of the water supply pipe 2 may be connected to an external water source (not shown), and the other end of the water supply pipe 2 may be connected to the detergent compartment 16. A water supply valve 3 may be installed at the water supply pipe 2 to control supply of water.

The detergent compartment 16 may be connected to the tub 30 via a connection pipe 4. Thus, water supplied through the water supply pipe 2 is supplied into the tub 30 along the connection pipe 4 together with the detergent via the detergent compartment 16.

A drain pump 5 and a drain pipe 6 to discharge water contained in the tub 30 out of the cabinet 10 are installed at a lower portion of the tub 30.

A damping member 7 that elastically supports the tub 30 may be disposed under the tub 30. The damping member 7 may be installed to connect an inner surface of the bottom of the cabinet 10 with an outer surface of the bottom of the tub 30. The damping member 7 may also be installed at an upper portion of the tub 30 to connect an inner surface of the top of the cabinet 10 with an outer surface of the top of the tub 30.

A motor 44 to rotate the rotary tub 40 may be installed at the rear surface of the tub 30. The motor 44 may be mounted on the rotary tub 40, and a drive shaft 45 of the motor 44 may be connected to the rotary tub 40. When the drive shaft 45 is driven by the motor 44, the rotary tub 40 connected to the drive shaft 45 is rotated about the drive shaft 45.

At the rear surface of the tub 30 is installed a bearing housing 46 to rotatably support the drive shaft 45. The bearing housing 46 may be formed of an aluminum alloy and may be inserted into a rear wall of the tub 30 when the tub 30 is injection molded. Bearings 45 may be installed between the bearing housing 46 and the drive shaft 45 to smoothly rotate the drive shaft 42.

During a washing cycle, the motor 44 rotates the rotary tub 40 in alternating directions at low speed. As a result, laundry contained in the rotary tub 40 is repeatedly raised and dropped thereby removing contaminants from the laundry. In a spin-dry cycle, the motor 44 rotates the rotary tub 40 in one direction at high speed thereby separating water from the laundry by centrifugal force applied to the laundry.

In this washing operation, wash water contained in the tub 30 may leak from the tub 30. The leakage of wash water may cause inconvenience to the user and damage components inside the washing machine 1. Furthermore, stagnant wash water therein may cause growth of mold, and the like. Thus, the washing machine 1 includes a sealing structure to prevent leakage of wash water.

The sealing structure is provided at the tub 30 and the door 20, respectively. A sealing structure installed at the tub 30 is referred to as a tub seal 35, and a sealing structure installed at the door 20 is referred to as a door seal 60. That is, the door seal 60 and the tub seal 35 may have different sealing structures.

The tub seal 35 and the door seal 60 may have a ring shape with an open center. The tub seal 35 and the door seal 60 may be formed of an elastic material such as rubber and may be partially deformed to prevent leakage of wash water.

The tub seal 35 is installed to prevent leakage of wash water contained in the tub 30. Particularly, the tub seal 35 may be disposed between the front panel 11 and the tub 30. The tub seal 35 is formed along a circumference of the inlet 12 to seal a gap between the front panel 11 and the tub 30.

Also, the door seal 60 may be formed such that the door 20 closely contact with the front panel 11 to close the inlet 12. Particularly, the door seal 60 may be disposed between the front panel 11 and the door 20. The door seal 60 may be formed along a circumference of the inlet 12 to seal a gap between the front panel 11 and the door 20.

When the inlet 12 is opened by rotating the door 20, the tub seal 35 may be exposed at the front surface of the cabinet 10 resulting in marring of the external appearance of the washing machine 1. Thus, the washing machine 1 includes a decorative panel 50 to prevent exposure of the tub seal 35 through the front surface of the cabinet 10. When the inlet 12 is opened as illustrated in FIG. 2, the decorative panel 50 forms a front external appearance of the cabinet 10.

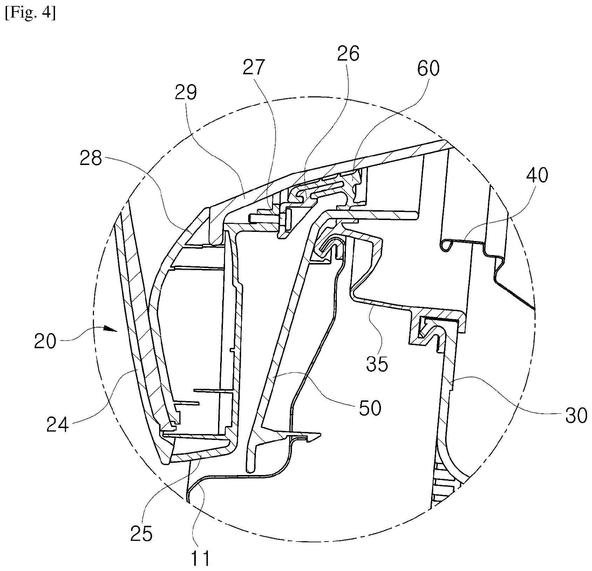

FIG. 4 is an enlarged view illustrating a portion 'A' of FIG. 3. Referring to FIG. 4, the door seal 60, the tub seal 35, and the decorative panel 50 will be described in more detail.

As illustrated in FIG. 4, the decorative panel 50 is disposed on the front panel 11. Particularly, the decorative panel 50 may be disposed between the front panel 11 and the door 20. Thus, when the door 20 closes the inlet 12, the decorative panel 50 may not be exposed through the front surface of the cabinet 10. When the door 20 opens the inlet 12, the decorative panel 50 forms the front external appearance of the cabinet 10.

The decorative panel 50 is fixedly mounted on the front surface of the front panel. The decorative panel 50 may also be detachably mounted on the front panel 11 or separably installed thereon by using a screw, or the like.

In addition, as illustrated in FIG. 4, the tub seal 35 may be disposed between the decorative panel 50 and the tub 30. One end of the tub seal 35 may be fixed to the tub 30, and the other end thereof may be fixed to the front panel 11. The tub seal 35 may be pressed by the decorative panel 50 to prevent leakage of wash water contained in the tub 30.

At least one portion of the decorative panel 50 may cover the tub seal 35. Accordingly, the tub seal 35 may be pressed thereby as illustrated in FIG. 4. In addition, the decorative panel 50 may be disposed to be spaced apart from the tub seal 35.

The decorative panel 50 may have a ring shape formed along the circumference of the inlet 12. In addition, one end of the decorative panel 50 is bent toward the inside of the inlet 12, thereby preventing exposure of the tub seal 35 through the front surface of the cabinet 10.

In addition, as illustrated in FIG. 4, the door seal 60 may be disposed between the door 20 and the decorative panel 50. One end of the door seal 60 may be fixed to the door 20 and may rotate together with the door 20. The door seal 60 may be pressed by the decorative panel 50, thereby sealing the inlet 12.

That is, the decorative panel 50 is disposed between the tub seal 35 and the door seal 60. The door seal 60 and the tub seal 35 may be disposed not to be in contact with each other by the decorative panel 50. However, FIG. 4 illustrates an example of the shapes of the tub seal 35 and the door seal 60, and they may have various other shapes.

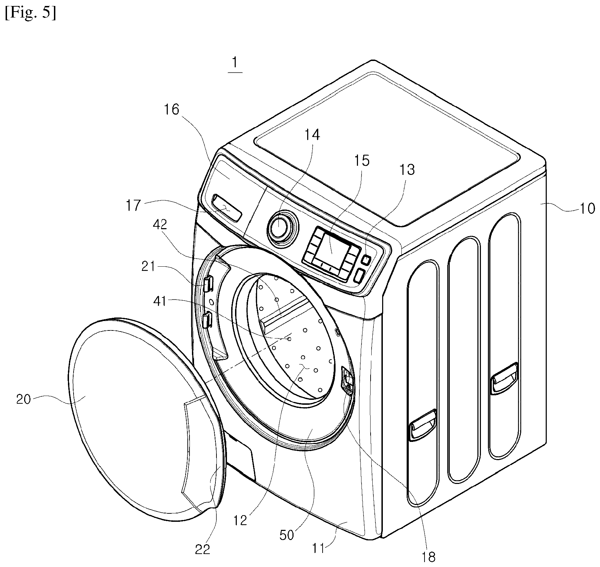

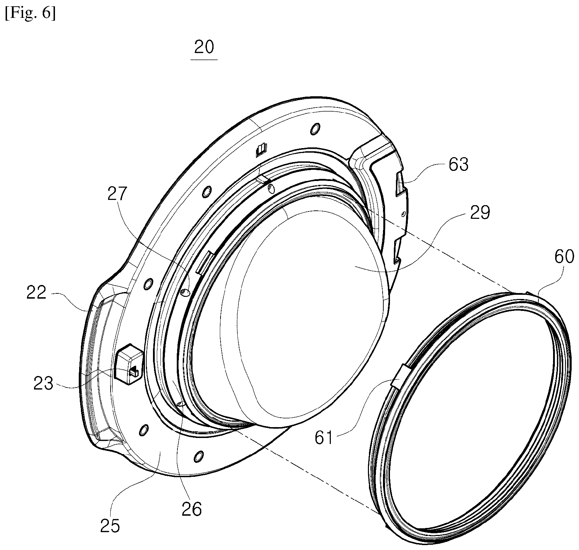

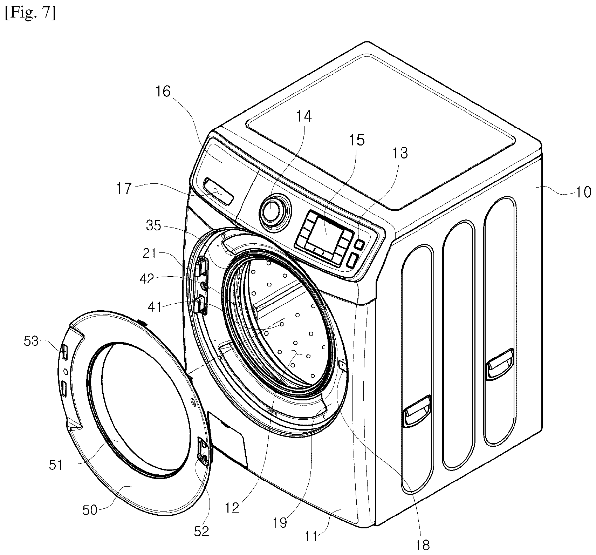

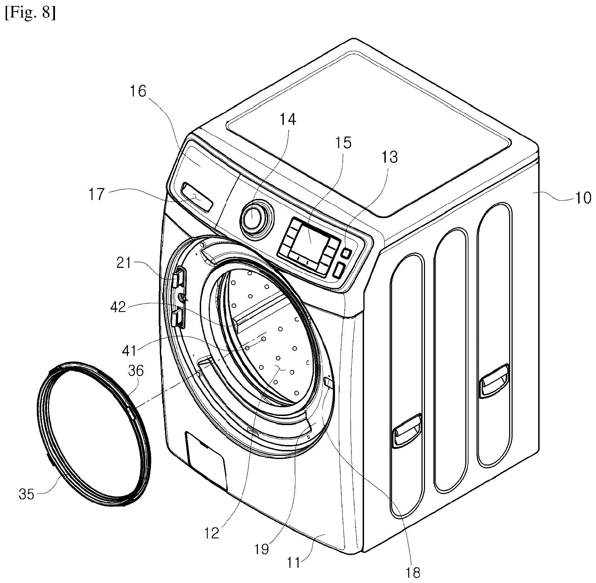

FIG. 5 is an exploded view illustrating a washing machine in which a door is separated from a main body according to an embodiment of the present disclosure. Hereinafter, the other part of the washing machine except for the door is referred to as the main body. FIG. 6 is an exploded view of the door, and FIGS. 7 and 8 are exploded views of the main body.

FIG. 6 is an exploded view illustrating the door of the washing machine according to an embodiment of the present disclosure.

The door 20 may include door glasses 24 and 29, an inner frame 25, and an outer frame 28 connected to the inner frame 25. The inner frame 25 may be disposed adjacent to the front panel 11. The door glasses 24 and 29 may include a front glass 24 and a rear glass 29 and may be formed of a transparent material.

The outer frame 28 and the inner frame 25 may be disposed to form an opening at the centers thereof. The front glass 24 is coupled to a front surface of the outer frame 28, and one side of the rear glass 29 may be coupled between the outer frame 28 and the inner frame 25.

The user may identify a state of the inside of the washing machine 1 while washing laundry through the opening formed by the outer frame 28 and the inner frame 25 and the door glasses 24 and 29 formed of the transparent material.

A hook 23 may be installed at one side of the inner frame 25. A hinge coupling groove 63 coupled with the hinge member 21 may be disposed at the opposite side thereof to the hook 23. One end of the hinge member 21 may be coupled to the hinge coupling groove 63.

The circumference of the rear glass 29 may be fixed between the inner frame 25 and the outer frame 28. A sealing fixing member 26 may be disposed along the circumference of the fixed rear glass 29. The sealing fixing member 26 may be integrally formed with the inner frame 25. In addition, as illustrated in FIGS. 4 and 6, the sealing fixing member 26 may be coupled to the inner frame 25 by using a screw 27 to be fixed thereto.

The door seal 60 may be coupled to the sealing fixing member 26 to be fixed to the door 20. The door seal 60 may include at least one door seal protrusion 61 inserted into and coupled to the sealing fixing member 26. As illustrated in FIG. 6, a plurality of the door seal protrusions 61 may protrude toward the sealing fixing member 26.

As described above, the door seal 60 moves with the door 20 in a fixed state to the door 20. The door 20 may efficiently close the inlet 12 by using the door seal 60.

FIG. 7 is an exploded view illustrating a main body of a washing machine according to an embodiment of the present disclosure. FIG. 7 illustrates that the decorative panel is separated from the main body illustrated in FIG. 5.

The front panel 11 may have a decorative panel mounting unit 19 on which the decorative panel 50 is mounted. The decorative panel mounting unit 19 may be disposed at a circumference of the inlet 12 to be recessed inward. The decorative panel mounting unit 19 may be integrally formed with the front panel 11. Thus, there are limitations on the shape of the decorative panel mounting unit 19, and the decorative panel mounting unit 19 may have an uneven surface caused during a manufacturing process.

When exposed to the outside, the decorative panel mounting unit 19 result in marring of the external appearance of the washing machine. Thus, the decorative panel 50 may be disposed on the front surface of the decorative panel mounting unit 19 thereby improving the external appearance of the washing machine 1.

The decorative panel 50 may be separably mounted on the decorative panel mounting unit 19 by using a screw, or the like. In addition, a structure corresponding to the decorative panel mounting unit 19 may be disposed at the rear surface of the decorative panel 50 such that the decorative panel 50 may be inserted into the decorative panel mounting unit 19.

The decorative panel 50 may have a ring shape and include a bent portion 51 at one end thereof adjacent to the inlet 12. The bent portion 51 is bent toward the inlet 12. The bent portion 51 is disposed such that the tub seal 35 disposed at a circumference of the inlet 12 is not exposed to the outside. That is, the bent portion 51 may be disposed adjacent to the inner surface of the tub seal 35.

In addition, the decorative panel 50 may have a hinge passing hole 53 through which the hinge member 21 passes. Thus, one end of the hinge member 21 may be fixed to the front panel 11, and the other end thereof may pass through the hinge passing hole 53 to be coupled to the door 20. Also, the decorative panel 50 may have a shape that passing the hinge member 21 without having the hinge passing hole 53

The decorative panel 50 may also have a hook passing hole 52 through which the hook 23 passes. Thus, one end of the hook 23 may be fixed to the door 20, and the other end thereof may pass through the hook passing hole 52 to be couple to the hook recess 18. In addition, the decorative panel 50 may have a shape that does passing the hook recess without having the hook passing hole 52 .

Thus, FIG. 7 illustrates an example of the shape of the decorative panel 50, and the decorative panel 50 may also have various other shapes. Also, the decorative panel 50 may have various shapes with various materials improving the external appearance of the washing machine.

FIG. 8 is an exploded view illustrating a main body of a washing machine according to an embodiment of the present disclosure. FIG. 8 illustrates that the tub seal is separated from the main body from which the decorative panel is removed.

When the decorative panel 50 is separated from the main body as illustrated in FIG. 7, the tub seal 35 may be exposed to the outside. The tub seal 35 is disposed at a circumference of the inlet 12. As illustrated in FIG. 4, one end of the tub seal 35 is fixed to the tub 30, and the other end thereof is fixed to the front panel 11.

The tub seal 35 is inserted and coupled between the tub 30 and the front panel 11. One end of each of the tub 30 and the front panel 11 is bent such that the tub seal 35 may be stably coupled to the tub 30 and the front panel 11.

In addition, the tub seal 35 may include at least one tub seal protrusion 36 inserted into the front panel 11 to be coupled thereto. As illustrated in FIG. 8, a plurality of tub seal protrusions 36 are disposed at a predetermined angle to protrude in one direction.

It will be apparent to those skilled in the art that various modifications and variations can be made in the present disclosure without departing from the scope of the invention as defined by the claims.

## Claims

1. A washing machine (1) comprising:
a cabinet (10);
a front panel (11) configured to form an appearance of a front surface of the cabinet (10), wherein the front panel (11) comprises an inlet (12) for insertion and removal of laundry;
a door (20) to open and close the inlet (12), wherein the door (20) comprises a door seal (60) configured to seal a gap between the front panel (11) and the door (20);
a tub (30) disposed in the cabinet (10) to contain wash water;
a tub seal (35) installed to prevent leakage of the wash water contained in the tub (30), wherein the tub seal (35) is disposed at a circumference of the inlet (12); and
**characterised in that** the washing machine (1) further comprises:
a decorative panel (50) disposed between the tub seal (35) and the door seal (60) and fixed to the front panel (11), wherein one end of the decorative panel (5) is bent towards the inlet (12) to prevent exposure of the tub seal (35) through the front surface of the cabinet (10).

2. The washing machine according to claim 1, wherein at least one portion of the decorative panel is configured to cover the tub seal.

3. The washing machine according to claim 1, wherein the tub seal is disposed between the front panel and the tub.

4. The washing machine according to claim 1, wherein the decorative panel is disposed between the front panel and the door.

5. The washing machine according to claim 1, wherein the decorative panel is formed along a circumference of the inlet.

6. The washing machine according to claim 5, wherein the door is rotatably coupled with the front panel and the door seal fixed is to the door to be rotated with the door.

7. The washing machine according to claim 6, wherein the door seal is pressed by the decorative panel to seal a gap between the front panel and the door.

8. The washing machine according to claim 1, wherein when the door closes the inlet, the decorative panel is configured to not be exposed through the front surface of the cabinet.

9. The washing machine according to claim 1, wherein when the door opens the inlet, the decorative panel is configured to form the appearance of the front surface of the cabinet.

10. The washing machine according to claim 1, wherein the decorative panel is mounted on the front surface of the front panel.

## Patentansprüche

1. Waschmaschine (1), umfassend:
ein Gehäuse (10);
eine Frontblende (11), die so konfiguriert ist, dass sie ein Aussehen einer Frontfläche des Gehäuses (10) bildet, wobei die Frontblende (11) einen Einlass (12) zum Einlegen und Entnehmen von Wäsche umfasst;
eine Tür (20) zum Öffnen und Schließen des Einlasses (12), wobei die Tür (20) eine Türdichtung (60) umfasst, die so konfiguriert ist, dass sie einen Spalt zwischen der Frontblende (11) und der Tür (20) abdichtet;
eine Wanne (30), die in dem Gehäuse (10) angeordnet ist, um Waschwasser zu enthalten;
eine Wannendichtung (35), die installiert ist, um ein Auslaufen des in der Wanne (30) enthaltenen Waschwassers zu verhindern, wobei die Wannendichtung (35) an einem Umfang des Einlasses (12) angeordnet ist; und
**dadurch gekennzeichnet, dass** die Waschmaschine (1) ferner umfasst:
eine Zierblende (50), die zwischen der Wannendichtung (35) und der Türdichtung (60) angeordnet und an der Frontblende (11) befestigt ist, wobei ein Ende der Zierblende (5) zum Einlass (12) hin gebogen ist, um verhindern, dass die Wannendichtung (35) durch die Frontfläche des Gehäuses (10) freiliegt.

2. Waschmaschine nach Anspruch 1, wobei mindestens ein Abschnitt der Zierblende konfiguriert ist, um die Wannendichtung abzudecken.

3. Waschmaschine nach Anspruch 1, wobei die Wannendichtung zwischen der Frontblende und der Wanne angeordnet ist.

4. Waschmaschine nach Anspruch 1, wobei die Zierblende zwischen der Frontblende und der Tür angeordnet ist.

5. Waschmaschine nach Anspruch 1, wobei die Zierblende entlang eines Umfangs des Einlasses gebildet ist.

6. Waschmaschine nach Anspruch 5, wobei die Tür drehbar mit der Frontblende gekoppelt ist und die Türdichtung befestigt an der Tür ist, um mit der Tür gedreht zu werden.

7. Waschmaschine nach Anspruch 6, wobei die Türdichtung durch die Zierblende gepresst wird, um einen Spalt zwischen der Frontblende und der Tür abzudichten.

8. Waschmaschine nach Anspruch 1, wobei, wenn die Tür den Einlass schließt, die Zierblende so konfiguriert ist, dass sie nicht durch die Frontfläche des Gehäuses freiliegt.

9. Waschmaschine nach Anspruch 1, wobei, wenn die Tür den Einlass öffnet, die Zierblende so konfiguriert ist, dass sie das Aussehen der Frontfläche des Gehäuses bildet.

10. Waschmaschine nach Anspruch 1, wobei die Zierblende an der Frontfläche der Frontblende angebracht ist.

## Revendications

1. Lave-linge (1) comprenant :
une enceinte (10) ;
un panneau avant (11) conçu pour former une apparence d'une surface avant de l'enceinte (10), ledit panneau avant (11) comprenant une entrée (12) pour l'insertion et le retrait du linge ;
une porte (20) pour ouvrir et fermer l'entrée (12), ladite porte (20) comprenant un joint de porte (60) conçu pour fermer hermétiquement un espace entre le panneau avant (11) et la porte (20) ;
une cuve (30) disposée dans l'enceinte (10) pour contenir l'eau de lavage ;
un joint de cuve (35) installé pour empêcher les fuites de l'eau de lavage contenue dans la cuve (30), ledit joint de cuve (35) étant disposé sur une circonférence de l'entrée (12) ; et
**caractérisé en ce que** le lave-linge (1) comprend en outre :
un panneau décoratif (50) disposé entre le joint de cuve (35) et le joint de porte (60) et fixé au panneau avant (11), une extrémité du panneau décoratif (5) étant repliée en direction de l'entrée (12) pour empêcher l'exposition du joint de cuve (35) à travers la surface avant de l'enceinte (10).

2. Lave-linge selon la revendication 1, au moins une partie du panneau décoratif étant conçue pour recouvrir le joint de cuve.

3. Lave-linge selon la revendication 1, ledit joint de cuve étant disposé entre le panneau avant et la cuve.

4. Lave-linge selon la revendication 1, ledit panneau décoratif étant disposé entre le panneau avant et la porte.

5. Lave-linge selon la revendication 1, ledit panneau décoratif étant formé le long de la circonférence de l'entrée.

6. Lave-linge selon la revendication 5, ladite porte étant couplée rotative au panneau avant et le joint de porte fixé étant sur la porte pour tourner avec la porte.

7. Lave-linge selon la revendication 6, ledit joint de porte étant comprimé par le panneau décoratif pour fermer hermétiquement un espace entre le panneau avant et la porte.

8. Lave-linge selon la revendication 1, lorsque la porte ferme l'entrée, ledit panneau décoratif étant conçu pour ne pas être exposé à travers la surface avant de l'enceinte.

9. Lave-linge selon la revendication 1, lorsque la porte ouvre l'entrée, ledit panneau décoratif étant conçu pour former l'apparence de la surface avant de l'enceinte.

10. Lave-linge selon la revendication 1, ledit panneau décoratif étant monté sur la surface avant du panneau avant.
